Europäisches Patentamt

European Patent Office

Office européen des brevets

(19)

(11) Veröffentlichungsnummer: **0 160 057 B1**

(12) **EUROPÄISCHE PATENTSCHRIFT**

(45) Veröffentlichungstag der Patentschrift:
30.03.88

(51) Int. Cl.⁴: **F 16 B 12/20**

(21) Anmeldenummer: **84903951.6**

(22) Anmeldetag: **24.10.84**

(86) Internationale Anmeldenummer:
**PCT/DE 84/00220**

(87) Internationale Veröffentlichungsnummer:
**WO 85/01996 (09.05.85 Gazette 85/11)**

(54) **VERBINDUNGSBESCHLAG.**

(30) Priorität: **28.10.83 DE 8330935 U**

(43) Veröffentlichungstag der Anmeldung:
**06.11.85 Patentblatt 85/45**

(45) Bekanntmachung des Hinweises auf die Patenterteilung:
**30.03.88 Patentblatt 88/13**

(84) Benannte Vertragsstaaten:
**FR**

(56) Entgegenhaltungen:
**DE - C - 434 225
DE - C - 692 271
GB - A - 794 608
GB - A - 2 076 104
GB - A - 2 098 698**

(73) Patentinhaber: **PAUL HETTICH GMBH & CO.,
Vahrenkampstrasse 12-16, D-4983 Kirchlengern 1 (DE)**

(72) Erfinder: **BRINKMANN, Manfred, Burgweg 56,
D-4971 Hüllhorst (DE)**

(74) Vertreter: **Stracke, Alexander, Dipl.-Ing. et al,
Jöllenbecker Strasse 164, D-4800 Bielefeld 1 (DE)**

## Beschreibung

Die vorliegende Erfindung betrifft einen Verbindungsbeschlag zum lösbaren Verbinden zweier winklig aufeinander stossender Möbelwände, bestehend aus zwei jeweils an einer der Möbelwände befestigbaren Beschlagteilen, von denen eines mit einer quer zu ihrer Längsachse federnd gelagerten und mittels eines Exenterbolzens längs verschiebbaren Haltezunge versehen ist, welche in das andere Beschlagteil hineinragt und einen Rastvorsprung des betreffenden Beschlagteiles hintergreift.

Ein Beschlag der gattungsgemässen Art ist aus der DE-C-434 225 bekannt.

Bei dem Verbindungsbeschlag nach der vorerwähnten Literaturstelle kann die Haltezunge ausschliesslich innerhalb einer Ebene bewegt werden. Die Haltezunge greift mit einem abgewinkelten Hakenstück in ein als Schliessblech ausgebildetes Beschlagteil ein. Die Rückseite dieses Schliessbleches ist eben ausgebildet und auf dieser ebenen Rückseite des Schliessbleches liegt das abgewinkelte Hakenstück der Haltezunge auf.

Die vorbekannte Konstruktion ermöglicht zwar eine Vormontage beim Verbinden zweier winklig aufeinander stossender Möbelwände, allerdings ist eine optimale Sicherung im vormontierten Zustand nicht gewährleistet.

Der vorliegenden Erfindung liegt die Aufgabe zugrunde, einen in funktioneller Hinsicht verbesserten Verbindungsbeschlag zu schaffen.

Diese Aufgabe wird erfindungsgemäss gelöst durch folgende Merkmale:

a) das freie Ende der Haltezunge ist als Fanghaken ausgebildet und zum Beschlagteil hin umgebogen;

b) der Rastvorsprung des anderen Beschlagteiles ist entsprechend der Umbiegung des Fanghakens hinterschnitten;

c) der Exenterbolzen ist mit einem vorspringenden Nocken versehen, in dessen Verschwenkbereich ein an der Haltezunge angebrachter Vorsprung vorgesehen ist.

Bei einem derart gestalteten Verbindungsbeschlag kann die Haltezunge Bewegungen in zwei Ebenen ausführen. Einerseits ist in bekannter Weise eine Verschiebebewegung der Haltezunge in ihrer Längsrichtung zum Zwecke des Spannens und Lösens durch Drehen des Exenters möglich. Darüberhinaus ist aber auch eine Kippbewegung quer zur Längsachse beim Zusammenfügen und Einrasten des Beschlages sowie beim Lösen des Beschlages durchführbar, nämlich durch Einwirkung des Nockens auf den Vorsprung der Haltezunge.

Durch die Umbiegung des freien Endes der Haltezunge einerseits und durch die entsprechende Hinterschneidung des Rastvorsprunges des anderen Beschlagteiles andererseits ergibt sich im vormontierten Zustand ein Formschluss zwischen den beiden Beschlagteilen, so dass die Verbindung mit einem derartigen Verbindungsbeschlag auch in vormontierter Stellung einwandfrei gesichert ist.

Da üblicherweise mehrere derartige Verbindungsbeschläge beim Zusammenbau eines vollständigen Möbels zum Einsatz kommen, können die einzelnen Möbelwände zunächst zusammengesteckt werden, anschliessend kann durch Betätigung des Spannteiles der einzelnen Verbindungsbeschläge die feste Verbindung der einzelnen Möbelwände hergestellt werden.

Weitere Merkmale der Erfindung sind Gegenstand von Unteransprüchen.

In den beigefügten Zeichnungen ist ein Ausführungsbeispiel der Erfindung dargestellt, welches im folgenden näher beschrieben wird.

Es zeigen:

Fig. 1 eine perspektivisch dargestellte Teilansicht zweier miteinander zu verbindender Möbelwände;

Fig. 2 einen Schnitt durch die miteinander verbundenen Möbelwände gemäss Fig. 1 im Bereich eines Verbindungsbeschlages;

Fig. 3 eine perspektivische Darstellung eines Beschlagteiles des Verbindungsbeschlages gemäss Fig. 2 vor der endgültigen Montage;

Fig. 4 eine Ansicht eines Exzenterbolzens des Beschlagteiles gemäss Fig. 3;

Fig. 5 eine Ansicht in Richtung des Pfeiles V in Fig. 4;

Fig. 6 einen Teilschnitt nach der Linie VI–VI in Fig. 5;

Fig. 7 eine Ansicht in Richtung des Pfeiles VII in Fig. 3;

Fig. 8 eine Ansicht in Richtung des Pfeiles VIII in Fig. 7;

Fig. 9 einen Teilschnitt nach der Linie IX–IX in Fig. 7.

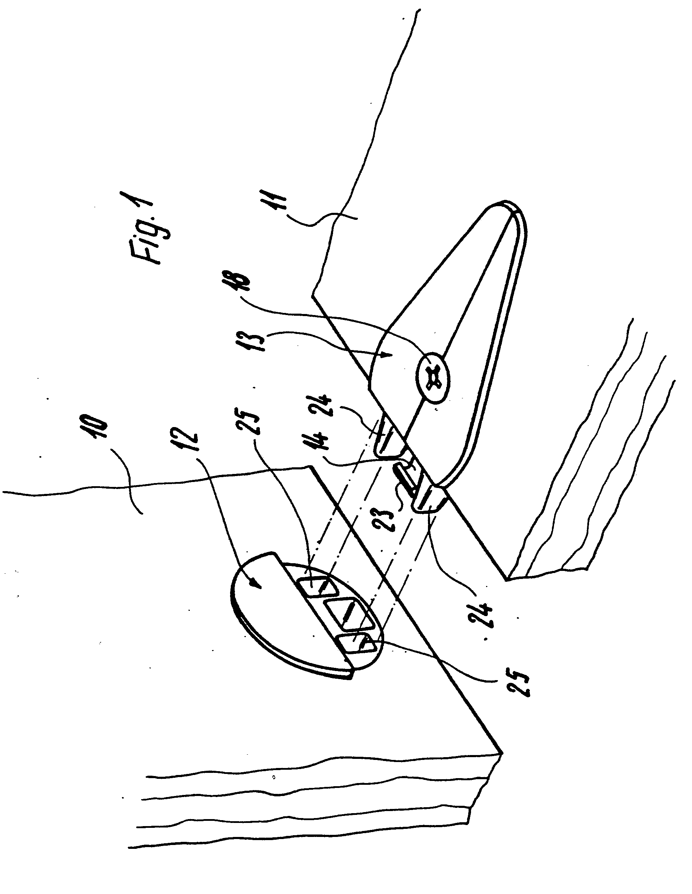

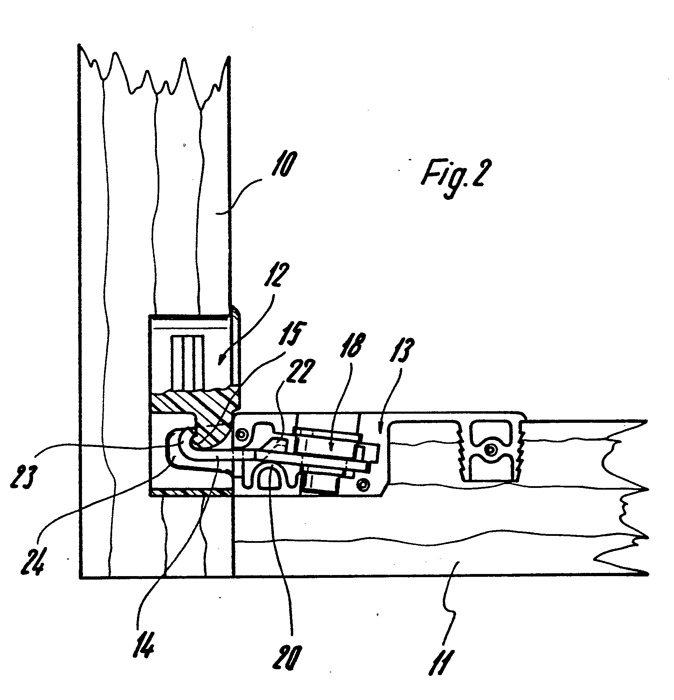

Aus den Fig. 1 und 2 geht hervor, dass zwei Möbelwände 10 und 11 mittels zweier Beschlagteile 12 und 13 miteinander verbindbar sind. Das Beschlagteil 12 ist in die Möbelwände 10 eingesetzt, das Beschlagteil 13 in die Möbelwand 11.

Wie die Fig. 2 sehr deutlich zeigt, ist das Beschlagteil 13 mit einer Haltezunge 1 versehen, die einen Rastvorsprung 15 des anderen Beschlagteiles 12 hintergreift.

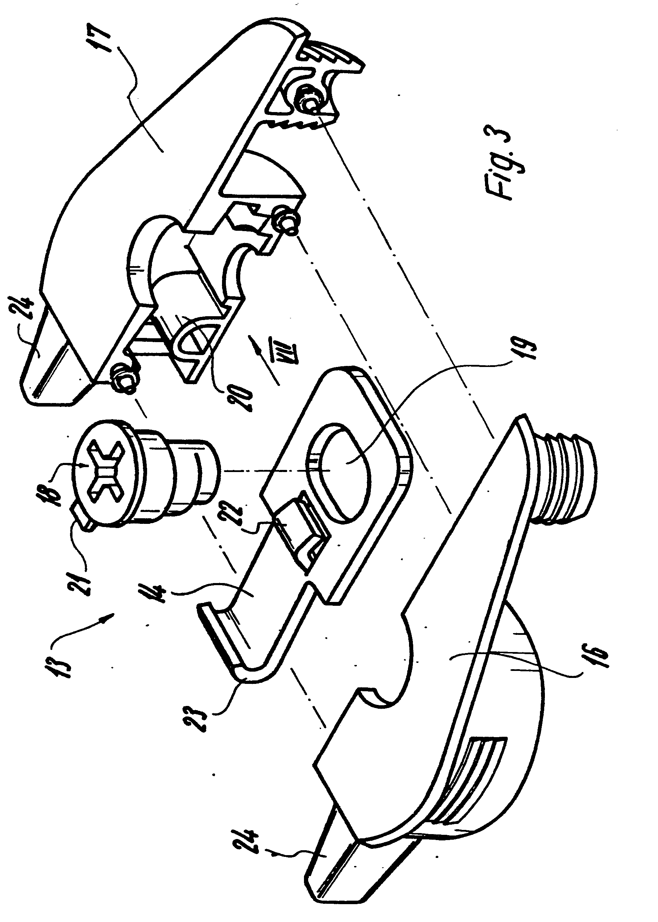

Insbesondere aus Fig. 3 geht hervor, dass das Beschlagteil 13 aus zwei zusammensteckbaren Gehäusehälften 16 und 17 besteht, in die ausser der schon erwähnten Haltezunge 14 ein Exzenterbolzen 18 eingesetzt ist.

Dieser Exzenterbolzen 18 durchtritt eine Ausnehmung 19 der Haltezunge 14. Durch Verdrehung des Exzenterbolzens 18 kann somit die Haltezunge 14 in Richtung ihrer Längsachse relativ zur Längsachse des Beschlagteiles 13 bewegt werden.

Der Exzenterbolzen 18 bildet also ein Spannteil, mittels dessen die Haltezunge 14 in Richtung ihrer Längsachse verschoben werden kann.

Das Beschlagteil 13, welches die Haltezunge 14 aufnimmt, ist mit angeformten Federbügeln 20 ausgestattet, auf denen die Haltezunge 14 in ihrem vorderen Bereich aufliegt. Von den Federbügeln 20 wird also die Haltezunge 14 nach oben gedrückt.

Es ist natürlich auch denkbar, die Haltezunge 14 durch in das Beschlagteil 13 eingesetzte Druckfedern oder andere Federelemente zu belasten.

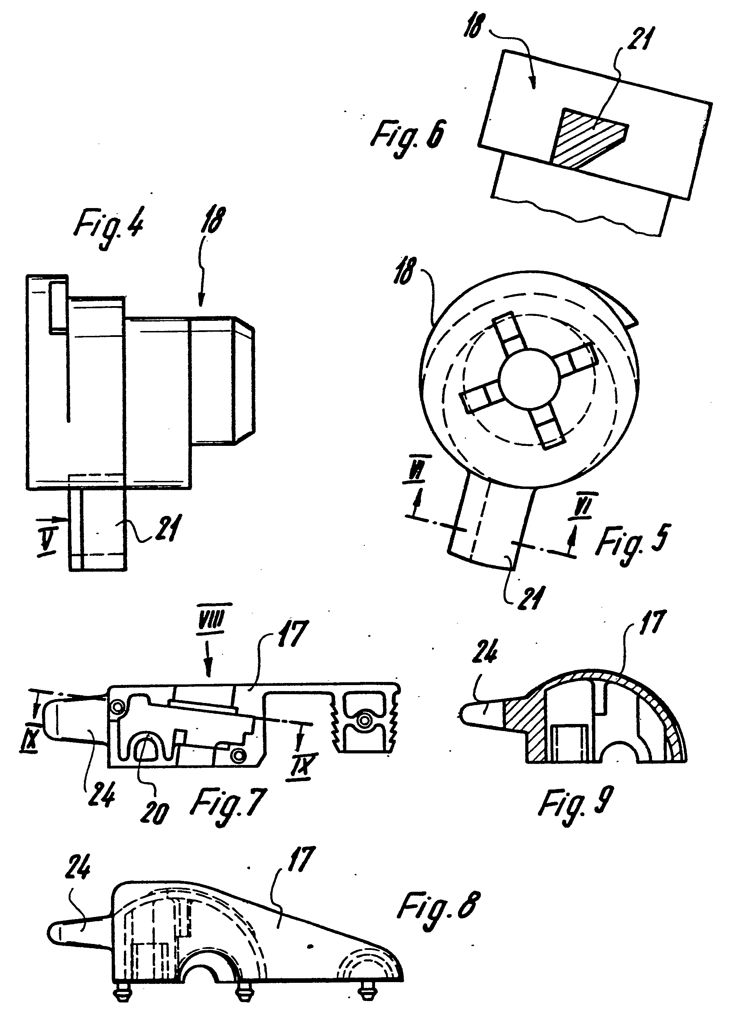

Die Fig. 3 zeigt ebenso wie die Fig. 6 sehr deutlich, dass an dem Exzenterbolzen 18 ein nach aussen vorstehender Nocken 21 angeformt ist. Im Verschwenkbereich dieses Nockens ist die Haltezunge 14 mit einem Vorsprung 22 versehen. Wird der Exzenterbolzen 18 innerhalb des Beschlagteiles 13 so weit verdreht, dass der Nocken 21 auf den Vorsprung 22 der Haltezunge 14 einwirkt, so wird die Haltezunge 14 entgegen der Wirkung der Federbügel 20 nach unten gedrückt.

Die Haltezunge 14 ist an ihrem freien Ende mit einem Fanghaken 23 versehen, der zum Beschlagteil 13 hin umgebogen ist. Wie Fig. 2 sehr deutlich zeigt, ist der Rastvorsprung 15 des anderen Beschlagteiles 12 entsprechend hinterschnitten.

Weiterhin ist das Beschlagteil 13 mit zwei Führungszapfen 24 versehen, die in entsprechende Aussparungen 25 des anderen Beschlagteiles 12 hineinragen, wenn der komplette Verbindungsbeschlag montiert ist.

Die Funktion des wie vorstehend beschrieben aufgebauten Verbindungsbeschlages ist wie folgt:

In der aus Fig. 1 ersichtlichen Stellung heraus werden die beiden Möbelwände 10 und 11 zusammengeführt. Die Führungszapfen 24 des Beschlagteiles 13 werden in die Aussparungen 25 des anderen Beschlagteiles 12 eingeführt. Die Haltezunge 14 ist durch entsprechende Verdrehung des Exzenterbolzens 18 maximal aus dem Beschlagteil 13 herausgeschoben. Durch die Federbügel 20 ist die Haltezunge 14 in die aus Fig. 2 ersichtliche Stellung nach oben geschoben. Beim Einführen des vorderen Endes der Haltezunge 14 in das andere Beschlagteil 12 wird der Fanghaken 23 der Haltezunge 14 zunächst vom Rastvorsprung 15 entgegen der Wirkung der Federbügel 20 nach unten gedrückt. Sobald der Fanghaken 23 den Rastvorsprung 15 überwunden hat, wird die Haltezunge 14 wieder nach oben gedrückt, so dass nunmehr der Fanghaken 23 hinter dem Rastvorsprung 15 liegt. Ein Zurückziehen des Beschlagteiles 13 ist nunmehr nicht möglich. Wird nun der Exzenterbolzen 18 verdreht, so wird entsprechend die Haltezunge 14 in das Beschlagteil 13 zurückgezogen, so dass der Fanghaken 23 nicht fest an den Rastvorsprung 15 anlegt und die Möbelwand 10 ebenso fest an die Möbelwand 11 heranzieht.

Ein Lösen der Verbindung ist dadurch möglich, dass der Exzenterbolzen 18 so weit verdreht wird, dass nicht nur die Verspannung zwischen den beiden Möbelwänden 10 und 11 aufgehoben wird, sondern über den Nocken 21 die Haltezunge 14 auch aus dem Eingriffsbereich des Rastvorsprunges 15 heraus nach unten gedrückt wird.

Die Führungszapfen 24 stehen über die Haltezunge 14 hinaus vor, so dass diese geschützt ist, wenn die beiden Beschlagteile 12 und 13 noch nicht miteinander verbunden sind.

Das erste Beschlagteil 13 kann in Abweichung vom dargestellten Ausführungsbeispiel auch die Form einer sehnenförmig angeschnittenen zylindrischen Scheibe aufweisen. Diese Form ist bei Verbindungsbeschlägen allgemein bekannt. In diesem Fall ist es vorteilhaft, die Führungszapfen 24 so anzuordnen, dass sie im Übergangsbereich zwischen der sehnenförmigen Abschnittsfläche und dem zylindrischen Bereich liegen, da durch diese Massnahme erreicht wird, dass das erste Beschlagteil 13 in einer entsprechenden Aufnahmebohrung eines Möbelteiles gegen Verdrehung gesichert ist.

## Patentansprüche

1. Verbindungsbeschlag zum lösbaren Verbinden zweier winklig aufeinanderstossender Möbelwände, bestehend aus zwei jeweils an einer der Möbelwände befestigbaren Beschlagteilen, von denen eines mit einer quer zu ihrer Längsachse federnd gelagerten und mittels eines Exzenterbolzens längsverschiebbaren Haltezunge versehen ist, welche in das andere Beschlagteil hineinragt und einen Rastvorsprung des betreffenden Beschlagteiles hintergreift, gekennzeichnet durch folgende Merkmale:

a) das freie Ende der Haltezunge (14) ist als Fanghaken (23) ausgebildet und zum Beschlagteil (13) hin umgebogen,

b) der Rastvorsprung (15) des anderen Beschlagteiles (12) ist entsprechend der Umbiegung des Fanghakens (23) hinterschnitten,

c) der Exzenterbolzen (18) ist mit einem vorspringenden Nocken (21) versehen, in dessen Verschwenkbereich ein an der Haltezunge (14) angebrachter Vorsprung (22) vorgesehen ist.

2. Verbindungsbeschlag nach Anspruch 1, dadurch gekennzeichnet, dass die Haltezunge (14) auf dem Beschlagteil (13) angeformten Federbügeln (20) federnd abgestützt ist.

3. Verbindungsbeschlag nach Anspruch 1 oder 2, dadurch gekennzeichnet, dass die Haltezunge (14) mindestens um das Mass der Hinterschneidung des Rastvorsprunges (15) innerhalb des Beschlagteiles (13) längsverschiebbar ist.

4. Verbindungsbeschlag nach einem der Ansprüche 1 bis 3, dadurch gekennzeichnet, dass das erste Beschlagteil (13) mit zwei vorstehenden Führungszapfen (24) versehen ist, die in entsprechende Aussparungen (25) des zweiten Beschlagteiles (12) eingreifen.

5. Verbindungsbeschlag nach Anspruch 4, dadurch gekennzeichnet, dass die Führungszapfen (24) über die Haltezunge (14) hinaus vorstehen.

6. Verbindungsbeschlag nach einem der Ansprüche 1 bis 5, dadurch gekennzeichnet, dass das erste Beschlagteil (13) die Form einer sehnenförmig angeschnittenen zylindrischen Scheibe aufweist und dass die Führungszapfen (24) im Übergangsbereich zwischen der sehnenförmigen Abschnittsfläche und dem zylindrischen Bereich des ersten Beschlagteiles (13) angeordnet sind.

## Claims

1. A set of connecting elements for releasably joining two perpendicularly abutting furniture walls, comprising a first and a second fastener to be fixed into each of said two furniture walls, the first of said fasteners being provided with a grip tongue that is resiliently arranged transversely relative to its longitudinal axis and movable longitudinally by means of an eccentric pin, said grip tongue extending into the second fastener where it engages a protruding catch shaped inside said second fastener, characterized by the features described below.

a) the free end of said grip tongue (14) has the shape of a catch hook (23) that is bent around towards the fastener (13);

b) the catch (15) in the second fastener (12) is recessed at its backside to fit the shape of said catch hook (23);

c) the eccentric pin (18) carries a lug (21), with a projection (22) being provided on said grip tongue (14) within the swivel range of said lug (21).

2. A set of connecting elements as described in claim 1 above, characterized in that said grip tongue (14) is resiliently supported by two spring straps (20) formed integral with said first fastener (13).

3. A set of connecting elements as described in claims 1 or 2 above, characterized in that said grip tongue (14) is longitudinally movable, inside said first fastener (13), over a distance which is at least equal to the depth of the backside recess in said catch (15) in said second fastener (12).

4. A set of connecting elements as described in one of claims 1 to 3 above, characterized in that said first fastener (13) is provided with two projecting guide tangs (24) engaging two corresponding recesses (25) in said second fastener (12).

5. A set of connecting elements as described in claim 4 above, characterized in that said guide tangs (24) protrude farther out than said grip tongue (14).

6. A set of connecting elements as described in claims 1 to 5 above, characterized in that said first fastener (13) has the form of a chordally truncated cylindrical plate or disc and that said guide tangs (24) are arranged in the transition zone between the chordally cut-off disc face and the cylindrical area of said first fastener (13).

**Revendications**

1. Ferrure de liaison pour l'assemblage amovible de deux parois de meuble angulairement jointives, constituée de deux parties de ferrure qui peuvent être respectivement fixées dans une des parois de meuble, et dont l'une est munie d'une languette de retenue montée élastiquement perpendiculairement à son axe longitudinal et déplaçable longitudinalement au moyen d'un boulon d'excentrique, languette qui pénètre dans l'autre partie de ferrure et qui s'engage derrière une saillie de crantage de ladite autre partie de ferrure, caractérisé en ce que:

a) l'extrémité libre de la languette de retenue (14) est configurée sous la forme d'un crochet d'arrêt (23) et est recourbée vers la partie de ferrure (13);

b) la saillie de crantage (15) de l'autre partie de ferrure (12) est contre-dépouillée d'une manière correspondante à la courbure du crochet d'arrêt (23);

c) le boulon d'excentrique (18) est muni d'un ergot (21) en saillie, dans la plage de pivotement duquel est prévu en épaulement (22) formé sur la languette de retenue.

2. Ferrure de liaison selon la revendication 1, caractérisée en ce que la languette de retenue (14) est appuyée élastiquement sur des étriers de ressort (20) formés sur la partie de ferrure (13).

3. Ferrure de liaison selon la revendication 1 ou 2, caractérisée en ce que la languette de retenue (14) est déplaçable longitudinalement à l'intérieur de la partie de ferrure (13) d'au moins la valeur de la contre-dépouille de la sallie de crantage (15).

4. Ferrure de liaison selon une des revendications 1 à 3, caractérisée en ce que la première partie de ferrure (13) est munie de deux tenons de guidage (24) en saillie, qui s'engagent dans des évidements correspondants (25) de la deuxième partie de ferrure (12).

5. Ferrure de liaison selon la revendication 4, caractérisée en ce que les tenons de guidage (24) s'étendent au-delà de la languette de retenue (14).

6. Ferrure de liaison selon une des revendications 1 à 5, caractérisée en ce que la première partie de ferrure (13) présente la forme d'un disque cylindrique coupé selon une corde, et en ce que les tenons de guidage (24) sont disposés dans la zone de transition entre la face partielle en forme de corde et la région cylindrique de la première partie de ferrure (13).

Fig.1

Fig.2

Fig. 3

0160057

Fig. 6

Fig. 4

Fig. 5

Fig. 7

Fig. 9

Fig. 8

11